# EUROPEAN PATENT SPECIFICATION

(11) **EP 2 321 019 B1**
(45) Date of publication and mention of the grant of the patent: **10.04.2019**
(21) Application number: 09791335.4
(22) Date of filing: 10.08.2009
(51) Int. Cl.: A63F 13/245, A63F 13/285, A63F 13/814, A63F 13/2145

(54) **A HAPTIC ENABLED GAMING PERIPHERAL FOR A MUSICAL GAME**
EIN HAPTISCHES ERMÖGLICHTES SPIEL-PERIPHERIE FÜR EIN MUSIKALISCHES SPIEL
PÉRIPHÉRIQUE DE JEU À EFFET HAPTIQUE POUR JEU MUSICAL

(30) Priority: 11.08.2008 US 87917 P
(43) Date of publication of application: 18.05.2011
(73) Proprietor: Immersion Corporation, San Jose, CA 95134 (US)
(72) Inventor: GRANT, Danny, A., Laval QC H7M 2A1 (CA); LACROIX, Robert, San Jose CA 95124 (US); RAMSAY, Erin, Montreal QC H4A 2V9 (CA); BARTEL, Hendrik, San Francisco CA 94103 (US); JANSSEN, Jennifer, Los Gatos CA 95032 (US)
(74) Representative: Müller-Boré & Partner Patentanwälte PartG mbB
(86) International application number: PCT/US2009/053289
(87) International publication number: WO 2010/019508

(56) References cited:
- US-A1- 2005 017 454
- US-B1- 7 320 643
- ACTIVISION: "Legends of Rock" GUITAR HERO 3 MANUAL, 2007, XP002548613

## Description

### RELATED APPLICATION

The present application claims the benefit of priority based on United States Provisional Patent Application Serial No. 61/087,917 filed August 11, 2008, in the name of inventors Danny A. Grant, Robert LaCroix, Erin Ramsay, and Hendrik Bartel, entitled "Haptic Enabled Guitar," all commonly owned herewith.

### TECHNICAL FIELD

The present disclosure relates generally to a haptic enabled gaming peripheral for a musical game.

### BACKGROUND

*Guitar Hero* and *RockBand* are music video games which are notable for their instrument-shaped controllers used by players to simulate the playing of music, represented on-screen by colored notes that correspond to various buttons (e.g., frets on a guitar, keys on wind instruments, etc.) on the controller. The games support individual play as well as cooperative and competitive modes for two or more players. In total, these games have been released for several home video game consoles (e.g., Sony Playstation, Nintendo Wii, Microsoft's Xbox, etc.) as well as handheld and mobile gaming systems.

For example, while playing a game with a guitar as the gaming peripheral, an extended guitar neck is shown vertically on the screen, and as the song progresses, colored markers indicating notes travel down the screen in time with the music. The colors and positions of the notes match those of various fret buttons on the guitar controller. Once the traveling note(s) on the screen reach the colored marker(s), the player must play the indicated note(s) by holding down the correct fret button(s) (i.e. selecting finger positions on the fret-board) and operating the strum bar on the guitar (i.e. striking or strumming a "virtual string") in order to score points. Success or failure will cause an on-screen meter to change, showing how well the player is playing (denoted by red, yellow, and green sections on the meter). Should the meter drop below the red section, the song will automatically end, with the player booed off the stage by the audience. Successful note hits will add to the player's score, and by hitting a long series of consecutive successful note hits, the player can increase their score multiplier.

Selected special segments of the song will have glowing notes outlined by stars, whereby successfully hitting all notes in this series will fill a special meter. The special meter can also be filled by using the whammy bar during sustained notes within these segments. Once the special meter is at least half full, the player can activate certain gaming enhancement by pressing the select button or momentarily lifting the guitar into a vertical position. When the gaming enhancement is activated, the scoring multiplier is doubled until the gaming enhancement is depleted. The meter also increases more dramatically when the gaming enhancement is activated, making it easier for the player to make the meter stay at a high level.

Notes shown on the screen can be a single note or be composed of two to four notes that makes a chord. Both single notes and chords can also be sustained as indicated by a colored line following the note marker, which depends on whether a sustained chord or string is present in the song being played. During a sustained note, a player may use the whammy bar on the guitar to alter the pitch or tone of the note. In addition, the games support virtual implementations of "hammer-ons" and "pull-offs," or other guitar-playing techniques that are used to successfully play a fast series of notes by only changing the fingering on the fret buttons without having to strum the strum bar. This also applies for finger tapping and other multi-touch interactions.

For some video game consoles, such as the Nintendo Wii, the gaming peripheral which is played by the user integrates the Wii's remote controller therein. As such, the gaming peripheral has the potential for haptic feedback as the Wii's remote controller has the ability to output haptic effects. However, the haptic effects output by the Wii remote controller onto the gaming peripheral may be limited due to various aspects of the Wii remote controller, such as motor performance.

What is needed is a haptic enabled gaming peripheral for use with such musical games that provide the user with haptic effects that provide a pleasurable and realistic experience to the user while playing the musical game.

### OVERVIEW

In some implementations of the invention, a gaming peripheral comprises a body simulating a musical instrument. A processor, located within the body, communicates with a host computer running a software program. The gaming peripheral includes a first actuator located in a portion of the body. The first actuator outputs a haptic effect in response to receiving an activating signal from the processor based on an event that occurs in the software program. In some implementations, the first actuator is located in the portion of the body relevant to where a user contacts or interacts with the gaming peripheral. In some implementations, the haptic effect is based on an event that is related to the user's contact or interaction with the gaming peripheral.

In some implementations, the gaming peripheral simulates a guitar including a body including a neck extending therefrom. A processor, located within the body, communicates with a host computer running a software program. The guitar includes a first actuator within the neck. The first actuator outputs a haptic effect in response to receiving an activating signal based on an event that occurs in the software program. In some implementations, the haptic effect is based on an event that is related to the user's contact or interaction with the neck of the guitar.

In some implementations, a first sensor senses at least one input element in the body of the gaming peripheral and sends a first sensor signal to a host computer running a software program. A haptic effect is output to the body of the gaming peripheral via a first actuator in response to receiving a first activating signal from the host computer based on an event that occurs in the software program. In some implementations, the first actuator is located in the portion of the body relevant to where a user contacts or interacts with the gaming peripheral. In some implementations, the first actuator is located in the portion of the body proximate to the at least one input element. In some implementations, the haptic effect is based on an event that is related to the user's contact or interactions (or lack thereof, respectively) with the input element.

In some implementations where the gaming peripheral simulates a guitar having a body including a neck extending therefrom, a first sensor senses a selection of at least one input element in the neck of the guitar and sends a first sensor signal to a host computer running a software program. A haptic effect is output to the neck via a first actuator in response to receiving a first activating signal from the host computer based on an event that occurs in the software program. In some implementations, the first actuator is located in the neck of the guitar. In some implementations, the first actuator is located proximate to the at least one input element. In some implementations, the haptic effect is based on an event that is related to the user's contact or interaction (or lack thereof, respectively) with the input element.

In various implementations of the invention, an actuator is located proximate to where a user contacts the body or other aspect of the gaming peripheral. In various implementations of the invention, an actuator is located proximate to where a user interacts with the body or other aspect of the gaming peripheral. In various implementations of the invention, an actuator is located proximate to an input element where the user provides input to the game via the gaming peripheral.

In some implementations where the gaming peripheral simulates a guitar, the first actuator is configured to output the haptic effect toward a palm side of the neck and/or toward a fret side of the neck. In some implementations, the neck include at least one input element, such as a depressible button, a touch pad or a touch screen. In some implementations, at least one sensing element is coupled to the input element, whereby the sensing element outputs a first sensor signal to the host computer in response to detecting the input element is being selected by a user's first hand. In some implementations, the guitar includes a second actuator that is positioned within the body, wherein the second actuator outputs a corresponding haptic effect to the body upon it receiving a second activating signal in response to a corresponding event that occurs in the software program.

In some implementations, the sensing element is configured to vary the first sensor signal in response to the sensing element detecting a finger of the user's first hand moving in a direction along the input element after the sensing element has detected the user has selected the input element, wherein the varied first sensor signal correspondingly updates the software program. In some implementations, the first actuator is configured to vary the haptic effect in response to a corresponding activating signal based on the sensing element detecting the finger moving in the direction along the input element. In some implementations, the guitar further includes a light emitting device coupled to the input element, wherein the light emitting device is configured to emit a light upon receiving a light emitting signal from the host computer.

In some implementations, the guitar includes one or more strum bars in the body, wherein the strum bar is configured to output a second sensor signal to the host computer in response to the strum bar being moved by a user's second hand. In some implementations, a second actuator is coupled to the strum bar, wherein the second actuator outputs a haptic effect to the strum bar upon receiving an activating signal from the host computer based on an event occurring in the software program. In implementations with multiple strum bars, each strum bar may be individually operable by the user. In some implementations, the guitar includes a whammy bar coupled to the body as well as a third sensing element coupled to the whammy bar, wherein the third sensing element is configured to output a third sensor signal to the host computer upon the user operating the whammy bar. In some implementations, the second actuator outputs a corresponding haptic effect to the body upon receiving a second activating signal in response to the whammy bar being operated. In some implementations, the guitar includes a third actuator coupled to the whammy bar, wherein the third actuator is configured to output a haptic effect to the whammy bar upon receiving a corresponding activating signal from the host computer.

In some implementations of the invention, the gaming peripheral simulates a string instrument. In some implementations of the invention, the string instrument may include, but is not limited to, an acoustic guitar, an electric guitar, a bass guitar, a violin, a mandolin, a cello, a bass, a banjo, or other string instrument.

In some implementations of the invention, the gaming peripheral simulates a wind instrument. In some implementations of the invention, the wind instrument may include, but is not limited to, a clarinet, a saxophone, an oboe, a flute, or other wind instrument.

In some implementations of the invention, the gaming peripheral simulates a brass instrument. In some implementations of the invention, the brass instrument may include, but is not limited to, a trumpet, a trombone, a tuba, a baritone, or other brass instrument.

In some implementations of the invention, the gaming peripheral simulates a keyboard instrument. In some implementations of the invention, the keyboard instrument may include, but is not limited to, a piano, an organ, an electronic keyboard, a synthesizer, an accordion, or other keyboard instrument.

In some implementations of the invention, the gaming peripheral simulates a percussion instrument. In some implementations of the invention, the gaming peripheral simulates a plurality of percussion instruments. In some implementations of the invention, the percussion instruments may include, but are not limited to, a snare drum, a bass drum, a crash cymbal, one or more tom-toms, a high hat, and/or other percussion instruments.

### BRIEF DESCRIPTION OF THE DRAWINGS

The accompanying drawings, which are incorporated into and constitute a part of this specification, illustrate one or more examples of implementations of the invention and, together with the description, serve to explain the principles and aspects of the invention.

In the drawings:
Figure 1 illustrates a perspective view of a gaming peripheral, such as a guitar, in accordance with various implementations of the invention.
Figure 2 illustrates a block diagram of a haptic enabled gaming peripheral in accordance with various implementations of the invention.
Figure 3 illustrates a front view of the haptic enabled gaming peripheral in accordance with various implementations of the invention.
Figure 4 illustrates a side view of a neck of a guitar with fret buttons according to a conventional gaming peripheral.
Figure 5 illustrates a side view of a neck of a guitar with fret buttons in accordance with various implementations of the invention.
Figures 6A and 6B illustrate a side view of a neck of a guitar with fret buttons in accordance with various implementations of the invention.
Figure 7 illustrates a front view of a strum bar according to a conventional gaming peripheral.
Figure 8 illustrates a front view of a strum bar of a guitar in accordance with various implementations of the invention.
Figures 9A and 9B illustrate strum bars of a guitar in accordance with various implementations of the invention.

### DESCRIPTION OF EXAMPLE EMBODIMENTS

Although various examples and implementations of a haptic enabled gaming peripheral for use with a music game are described herein in the context of a haptic enabled guitar, the invention is not so limited. The following description is illustrative only and is not intended to be limiting in any way. Other gaming peripherals and implementations thereof will readily suggest themselves to persons skilled in the art having the benefit of this disclosure. Reference will now be made in detail to various implementations of the invention as illustrated in the accompanying drawings. The same reference indicators will be used throughout the drawings and the following description to refer to the same or like items.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

In accordance with this disclosure, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein. Where a method comprising a series of process steps is implemented by a computer or a machine and those process steps can be stored as a series of instructions readable by the machine, they may be stored on a tangible medium such as a computer memory device (e.g., ROM (Read Only Memory), PROM (Programmable Read Only Memory), EEPROM (Electrically Eraseable Programmable Read Only Memory), FLASH Memory, Jump Drive, and the like), magnetic storage medium (e.g., tape, magnetic disk drive, and the like), optical storage medium (e.g., CD-ROM, DVD-ROM, paper card, paper tape and the like) and other types of program memory.

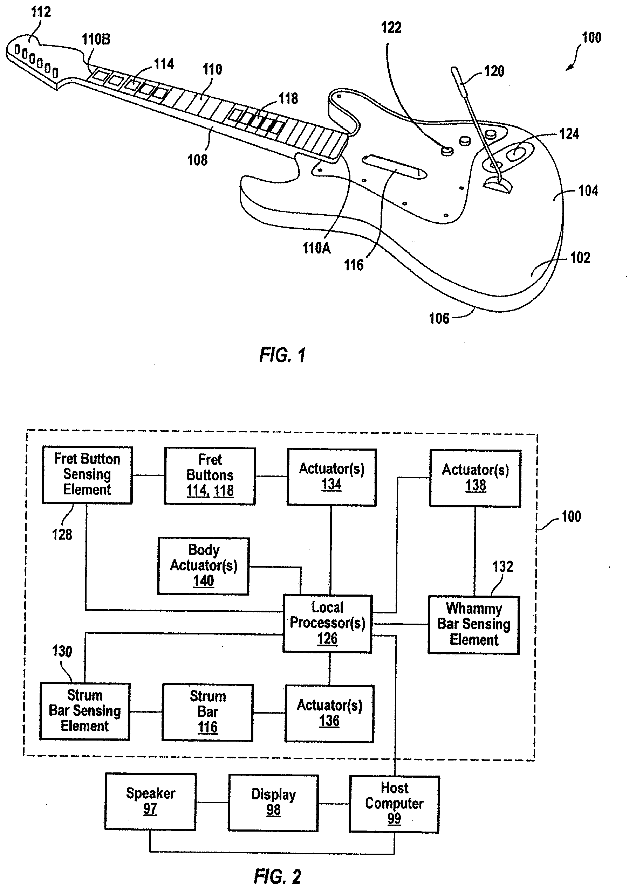

Figure 1 illustrates a perspective view of a haptic enabled gaming peripheral according to various implementations of the invention. More particularly, as illustrated, the gaming peripheral simulates a guitar and various implementations of the invention will now be described in this context for purposes of clarity, but not by way of limitation. As illustrated in Figure 1, the guitar 100 includes a body 102 having a front surface 104 and a back surface 106. In addition the guitar 100 includes a neck 108 having a fret-board 110 thereon having an end 110A which meets the body 102 and an opposite end 110B that is attached to a head 112. Two primary areas of interaction between the user and the guitar 100 during play are 1) the five input sensing elements 114 proximal to the head 112, and 2) the strum bar 116 on the front surface 104 of the body 102. In addition to the areas of interaction, various portions of the user's body may contact the guitar 100 including, but not limited to, the hand of the user with the neck 108, the hip or leg of the user with the back surface 106, the arm of the user with a portion of the front surface 104, or other contact. In various implementations, the fret-board 110 may include additional input sensing elements 118 at the octave frets proximal to the body 102. In addition, the guitar 100 may include a whammy bar 120 on the front face 104 as well as one or more operating buttons 122. Although the configurations of the guitar shown herein are similar to the Fender® Stratocaster® guitar, it should be noted that any other model of guitar is contemplated for a haptic enabled guitar.

Figure 2 illustrates a block diagram of the haptic enabled gaming peripheral in the context of a guitar according to various implementations of the invention. The guitar 100 includes a transceiver port 124 (Figure 1) which connects the guitar 100 to the video game console 99 (hereinafter referred to as well as the "host computer"). In some implementations, the transceiver port 124 connects the guitar 100 to the host computer 99 via a wire. In some implementations, the transceiver port 124 wirelessly connects the guitar 100 to the host computer 99. The host computer 99 may be coupled to a display 98 which displays the graphical environment of the video game. Speakers 97 either integral or separate from the display 98 audibly play the music from the video game. In some implementations, the speakers 97 are integrally part of the haptic guitar 100.

In some implementations, as illustrated in Figure 2, the guitar 100 includes one or more local processors 126 therein which are coupled to one or more input sensing elements which are illustrated in the guitar context as a fret button sensing element 128, a strum bar sensing element 130, and/or a whammy bar sensing element 132. Other input sensing elements may be used for other instruments as would be appreciated. In particular, the local processor 126 is configured to receive and process information signals from the input sensing elements 128, 130, 132 as well as to communicate such information signals with the host computer 99. In addition, the local processor 126 is coupled to one or more actuators which are illustrated in the guitar context as a neck or fret-board actuator 134, a strum bar actuator 136 a whammy bar actuator 138, and/or a body actuator, any one or more of which may be included. The local processor 126 provides haptic effect signals to various ones of the actuators 134, 136, 138, 140 based on high level supervisory or streaming commands from the host computer 99. In some implementations, the voltage magnitudes and durations are streamed to the guitar where information is provided by the host computer to the actuators.

In operation, the host computer 99 may provide high level commands to the local processor 126 such as the type of haptic effect to be output (e.g. vibration, jolt, detent, pop, etc.) by one or more selected actuators 134, 136, 138, 140, whereby the local processor 126 instructs the actuator 134, 136, 138, 140as to particular characteristics of the haptic effect which is to be output (e.g. magnitude, frequency, duration, etc.)

The local processor 126 may be housed within the guitar 100 and typically, may not be easily removable from the guitar 100 housing (e.g. Xbox, Playstation 3, etc.). In some implementations, the local processor 126 is within a dedicated video game controller (e.g. Wii remote control) which is removably housed within the guitar 100. In such implementations, the local processor 126 is within the video game controller and receives the information signals from the sensing elements 128, 130, 132 and communicates with the host computer 99. In some implementations, the local processor 126 within the video game controller may provide instructions to and may control any one or more of the actuators 134, 136, 138, 140. The guitar 100 may also include a dedicated local processor in addition to the processor in the dedicated video game controller, whereby processing duties, communications and instructions are efficiently routed between the multiple processors to achieve greater speed, bandwidth, and flexibility.

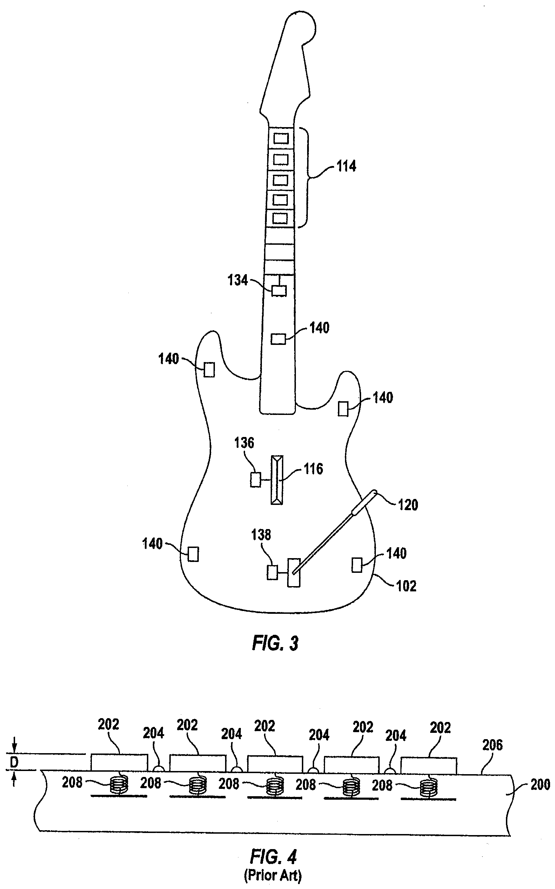

Figure 3 illustrates a haptic enabled guitar according to various implementations of the invention. In Figure 3, the guitar 100 includes one or more actuators 134 coupled to the input sensing elements 114. In some implementations, one actuator may be used to output haptic effects to more than one or even all of the fret buttons. It should be noted that although fret buttons close to the body are not shown in Figure 3 (as opposed to Figure 1), such fret buttons and corresponding actuator(s) are contemplated. As stated above, the strum bar actuator 136 is coupled to the strum bar 116. In some implementations, an actuator 138 may be utilized to output haptic effect to the whammy bar 120. In some implementations, one or more actuators 140 may also be placed at various locations along the neck 110 and/or body 102 of the guitar 100. In particular, the neck 110 may include the actuator 134 whereby the outputted haptic effects are felt directly on the user's left hand (in the case of playing guitar right handed). It should be noted that although not specifically shown in Figure 3, the actuator 134 is positioned below the input sensing elements 114 and/or 118 whereby the outputted haptic effects are felt directly on the user's left hand (in the case of playing guitar right handed) while pressing the sensing elements 114, 118. Such actuators selectively output haptic effects to provide a realistic feeling to the user that the guitar is alive and feels realistic during gameplay.

In some implementations, one or more actuators 140 are targeted to be activated such that only a section of the entire guitar 100 (e.g. portions or all of the body, neck) outputs the haptic effect. The placement of actuators in Figure 3 are exemplary and any number of actuators may be applied at any desired location of the guitar. In some implementations of the invention, actuators may be placed at locations on the guitar 100 proximate to where a user contacts the guitar.

In some implementations, inputs from one portion of the guitar may be used to trigger actuators at or proximate to that portion of the guitar. In some implementations of the invention, inputs from one portion of the guitar may be used to trigger actuators at other portions of the guitar. In some implementations of the invention, gaming events independent from inputs from the guitar may be used to trigger actuators at various portions of the guitar. Various inputs and/or gaming events may be used to trigger various actuators as would be appreciated. By way of example of not limitation, inputs from strum bar sensing element 130 may trigger actuator 134 on the next of guitar 100.

Actuators of varying types are contemplated including, but not limited to, eccentric rotational mass (ERM) actuators, linear resonant actuators (LRA), piezoelectric actuator, voice coil actuator, electro-active polymer (EAP) actuators, memory shape alloys, etc.

Figure 4 illustrates a side view of the neck of a conventional video game guitar controller. As illustrated in Figure 4, the neck 200 is shown to include five input sensing elements in the form of depressible fret buttons 202 separated by frets 204 and protruding a distance D from the top surface 206 of the neck. It is contemplated that the guitar may be configured to not have any frets 204 in any of the implementations discussed herein. It is estimated that the distance D is approximately 1.5 millimeters (1/16 inch). The fret buttons 202 are urged upward by a spring 208, whereby the user overcomes the upward force by applying a force on the top surface of the buttons 202 and pressing the buttons 202 down the distance D. A switch (not shown) registers when a particular button 202 is pushed down and indicates to the host computer 99 that the user has played a note.

However, the configuration of the fret buttons 202 of the conventional guitar controller results in several disadvantages. One such disadvantage is the substantially large distance which the finger must travel to register that a note has been played. This impedes the speed of execution as the large amount of distance D does not allow the user's digits to go as fast as they are capable going. Additionally, after a substantial amount of game play, the large distance of travel may cause the user to experience fatigue or injury. Additionally, the conventional configuration of the buttons may make loud noises and provide a spongy confirmation when they are pressed. This may distract from the game experience as the sound of the buttons during depression may be significant to the volume of the music output by the speakers 97 (Figure 2).

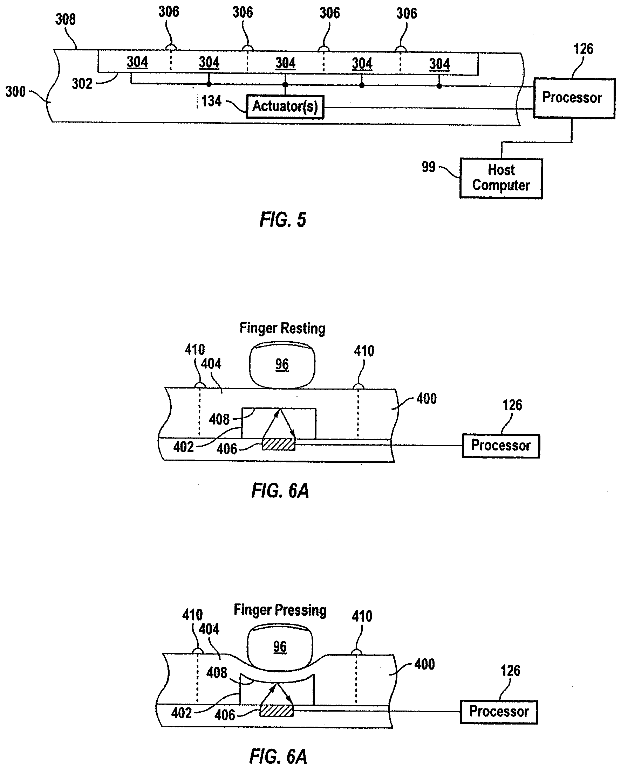

Figure 5 illustrates a side view of a neck of a guitar according to various implementations of the invention. As illustrated in Figure 5, the neck 300 utilizes a sensing element 302 positioned in the neck 300 to overcome one or more disadvantages of the conventional guitar controller. In some implementations, the sensing element 302 is a capacitive sensing element 302 and may be suspended within the neck 300. The sensing element may be configured to include five capacitive sensing buttons 304 shown separated by one another by frets 306. In some implementations, five independent and separate capacitive sensing buttons may be used. Each of the sensing buttons 304 may be separately color coded by the color scheme in existing video game guitar controllers. In some implementations, the input sensing elements are configured to have an LED or other light emitting source therein, wherein the fret button lights up either when the user presses the fret button or when the user is cued to press the fret button to strike the correct note.

The capacitive sensing buttons 304 sense a change in capacitance as the user's digit applies a predetermined force onto the fret button(s) 304. Although the buttons 304 are illustrated to be flush with the top surface 308 of the neck 300, the buttons 304 may be slightly elevated or recessed with respect to the top surface 308 of the neck 300. In some implementations, the buttons 304 are programmed to register that they have been pressed when a threshold amount of pressure is applied thereto. This allows the buttons 304 to be pressed downward by the user without registering that the user has actually played a note. In other words, the user is able to apply pressure on the buttons 304 (without the sensors not actually reading an input) to relieve pressure on the user's wrist and finger joints. In some implementations, a sensing element with sensing buttons which operate using resistive touch technology, as opposed to capacitive touch technology, may be used.

Figures 6A and 6B illustrate side views of a fret button according to various implementations of the invention. As illustrated in Figures 6A and 6B, the guitar utilizes an optical input sensing element 402 positioned in the neck 400 to sense selection of the input sensing element (in the form of a fret button) 404 by the user during gameplay. In some implementations, each fret button 404 comprises the optical sensing element 402, whereby the guitar includes five optical sensing elements separated by frets 410 (or ten if additional input sensing elements 118 proximal the body are incorporated). In some implementations, one optical sensing element is positioned within the neck 400 and configured to include five optical sensing portions partitioned into individual buttons and separated by frets 410. In some implementations, the optical sensor 402 includes an emitter/receiver element 406 which emits light to a bottom surface 408 of the fret button 404, whereby the emitter/receiver element determines if the button has been pressed by continuously measuring the amount of light which is transmitted and then received by the emitter/receiver 406.

In some implementations, the top surface of the fret button 404 configured to have some compliance to be able to move in a downward direction when the user's digit 96 applies a predetermined amount of force on the top surface of the fret button 404. The emitter/receiver 406 senses a change in the received light over a measured amount of time while the user applies the force to the fret button 404. Once the emitter/receiver 406 senses a threshold change in light, the optical sensing element 402 sends a sensing signal to the processor 126 indicating that the fret button 404 has been depressed. The threshold change may be set such that the fret buttons 404 may be slightly pressed downward by the user without registering that the user has played a note. This allows the user to apply pressure on the button 404 (without the sensors not actually triggering a note selection) to relieve pressure on the user's wrist and finger joints. In an non-limiting example, such a threshold change may be set to an equivalent to the user pressing the fret button 404 more than 400 microns. An advantage of the optical sensing element 402 is that the user can rest his or her fingers on the fret buttons 404 without accidentally triggering the buttons 404. In addition, the optical sensing element 402 allows the user to slide his or her fingers along the fret buttons 404 like a real guitar (for instance to play power chords) rather than having to raise his or her fingers, reposition them and then press down (as with existing game controller guitars).

In some implementations, the fret board includes 4, 5, 6 or 12 ridges or slots thereon, whereby each ridge or slot represents a string which runs along a portion or all of the fret board. The ridges or slots would serve as the strings, whereby sensor would detect when the user presses or puts his or her digits on the string. The processor could receive information as to the fret number and string number (e.g. 4^{th} fret, 3^{rd} string) and output signals representative of that fret position which would be played back through a speaker. Haptic effects would be output to provide the user with a realistic experience that he has pressed a string. This could serve as a training tool for beginner guitar players.

The haptic enabled guitar may have the input sensing element in the form of a touch element such as a touch screen or a touch pad. In some implementations, the touch elements may be along a portion or along the entire length of the fret-board, whereby one or more frets includes the touch element which sense the user's digit upon coming into contact with the touch element. In some implementations, the touch element is a touch screen which displays one or more strings, whereby touch elements on neighboring frets enable multiple rows of strings at multiple locations along the fret-board. In some implementations, the touch screen may highlight which strings and/or buttons for the user to press during the song. This may also be done for multiple strings and across multiple frets, such in playing power chords or slide guitar. The fret-board touch elements may be used to train the user on how to use the haptic-enabled guitar. It should be noted that any other types of touch enabled technology may be utilized to sense the user pressing the input sensing element. Various implementations of the invention may incorporate the use of one or more charged coupled-devices (CCD) or a pressure sensor to detect and monitor finger position on the fret board. In some implementations, the touch screen may display graphics other than virtual strings during play. In an example, the touch screen may display an animated lightning bolt or moving stars along the neck when the user has hit a consecutive note streak or has hit a high score.

In some implementations, any of the above mentioned input sensing elements may be used measure the change in position of the user's digit over a period of time while the digit is pressing on the input sensing element to add additional real life guitar effects. For instance, the sensing element measures the user's digit moving in an upward and/or a downward in direction perpendicular to the orientation of the strum bar. The element can then send a sensing signal indicating that the user is bending the virtual string (and thus modulating the note). In response, the host computer may adjust the pitch of the note and/or chord accordingly. In some implementations, the sensing element can provide a sensor signal representative of a vibrato when the sensing element measures the user's digit select and rapidly wobble the fret button. In response, the host computer will rapidly adjust the pitch of the note accordingly. In some implementations, the bending and/or vibrato feature may be similar to the effect which results from the user operating the whammy bar.

In some implementations, the guitar includes one or more actuators 128 positioned within the neck in which the actuator is coupled to the processor. Figure 5 will be referenced for discussion of the actuator although it should be noted that the actuator may be used with any of the above described input sensing elements. The actuator 128 is configured to output haptic effects to the sensing buttons 304 when activated by the processor 126 such that a haptic effect is felt in the user's digit when in contact with the particular fret button. It should be noted that although one actuator is shown and described, more than one actuator may be used. It is contemplated that the actuator and sensing element may be integrally one piece as opposed to separate components.

The operation of the input sensing elements will now be discussed in relation to Figure 5, although it should be noted that the operation may apply to any or all of the other input sensing elements discussed herein. During game play, the user presses his or her digits against one or more of the input sensing elements 304 to strike a note in conjunction with the video game, whereby the sensing element 302 detects the user's selection of the 304 button. Once the selection is detected, the sensing element 302 sends or transmits a sensor signal to the processor 126 to indicate that the user had affirmatively depressed that particular sensing element 304. The processor 126 may send information representative of the sensor signal to the host computer 99, whereby the host computer 99 compares the received information from the guitar with the information shown on the display screen 98 to determine whether there is a match. If there is a match, the corresponding note or chord in the song is heard through the speakers 97. In some implementations, the host computer 99 may send a high level supervisory command to the processor 126 to output a haptic effect on the button 304 as well as the type of haptic effect to be output (e.g. vibration, jolt, etc.). The processor 126 receives the command and activates the actuator 128 to output a selected haptic effect to that particular button 304. The user feels the haptic effect and is informed that the correct note and/or button 304 was selected. The host computer and/or local processor can instruct the type of haptic effect is to be output by the actuator based on the corresponding sound which is heard on the song being played. For example, the actuator may be instructed to output a jolt to the fret button and/or strum bar which representative of a string being plucked. In another example, the actuator may be instructed to output a low amplitude and/or low magnitude vibration to the fret button when a long sustained note is correctly played. Similarly, the actuator may be instructed to output a low amplitude and/or low magnitude vibration to two or more fret buttons when a chord is correctly played. In some implementations, the controller could be configured such that triggering a note or chord out of time with the music could result in a haptic effect, or a haptic effect that is jarring and/or unpleasant.

In some implementations of the invention, different haptic effects may be sent to different fret buttons. In some implementations of the invention, different haptic effects may be sent to the same fret button at different times. In some implementations of the invention, different haptic effects may be sent to the same fret button depending on the type of note (e.g., whole note, half note, quarter note, etc.) in the song being played. In some implementations of the invention, different haptic effects may be sent to the same fret button depending on the separation between notes (e.g., staccato, slurs, hammer-ons, pull-offs, etc.) in the song being played. In some implementations of the invention, different haptic effects may be sent to the fret buttons based on a type or feel of a guitar or more generically, a stringed instrument.

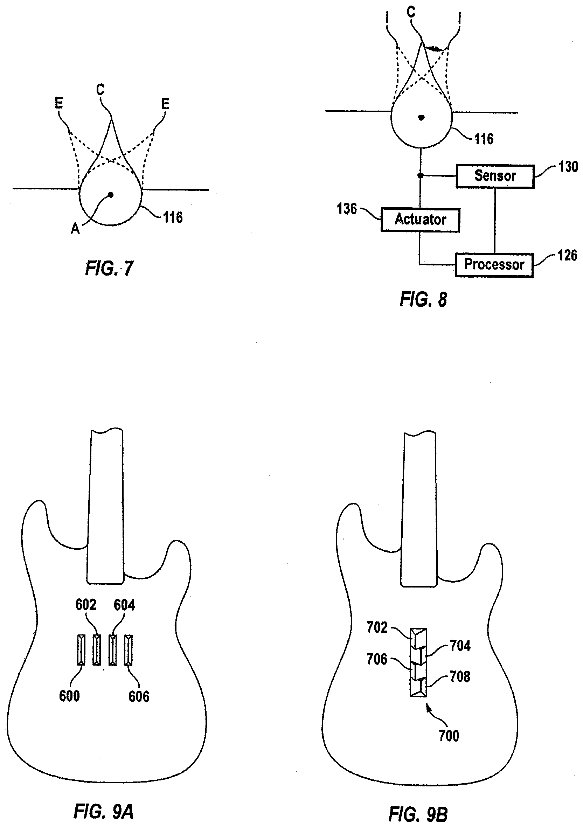

As mentioned above, the strum bar 116 may be used as an input element of the haptic guitar, because the video game usually requires the user to emulate strumming or picking of the virtual string along with the selected button 114 by pivotably moving the strum bar upwards and/or downwards. As illustrated in Figure 7, the configuration of the strum bar on a conventional guitar controller is such that it is springly urged into the center position C by default and is pivotably moved about axis A to end positions E, whereby a switch coupled to the strum bar sends an activation signal to the processor only when the strum bar reaches positions E at the end of its travel. This is disadvantageous and unrealistic in that real guitar techniques may require fast picking and/or strumming, thereby necessitating limited and precise striking of the guitar string. By the strum bar sending the activation signal only when it is moved to the end positions E does not provide the user with a real sense as to when, or even whether, the user has struck the virtual string.

In some implementations of the invention, however, actuator 136 may output a haptic effect to the strum bar 116 to convey a feeling of the string. This may be advantageous where the user is playing a bass guitar in the video game, whereby bass guitar strings are typically heavier than regular guitar strings. In some implementations, a kinesthetic haptic effect may be applied to the strum bar 116 such that that the virtual string is perceived as "heavy" or "light," whereby the user is required to apply different forces to the strum bar 116 to strike a note. This may be accomplished by coupling actuator 136 to strum bar 116 and varying a resistive force applied to the actuator 136. In some implementations, an inertial haptic effect may be implemented such that striking the strum bar 116 triggers a vibration generated by the actuator 136. Similar effects could be applied to the fret buttons to simulate playing different strings on different guitars, or different strings on the same guitar. In particular, the actuator may output different resistive forces to the fret buttons depending on the size of the string such that the user would be required to apply different forces to play the note.

Figure 8 illustrates a side view of the strum bar according to various implementations of the invention. As illustrated in Figure 8, the strum bar 500 of the guitar sendings the activation signal when the strum bar 500 is pivotably moved across the center position in either direction. In some implementations, the strum bar 500 registers a virtual string being struck when it is moved past the center position C an angle θ in either direction to intermediate positions I. It is contemplated that the strum bar can be moved to the extreme positions of travel E as in Figure 7, however the strum bar sensor 130 sends the activating signal when the position of the center lever 502 across the center position C. This provides the user with a more realistic experience of a virtual string when striking, strumming or plucking the strum bar 500.

As illustrated in Figure 8, the actuator 136 is coupled to the strum bar 500, whereby the actuator 136 outputs haptic effects to the strum bar 500 which are then felt by the user to indicate a note or chord has been successively picked or strummed. The actuator 136 may be programmed to output a jolt through the strum bar when the individual uses the strum bar to strike only one note. In some implementations, the actuator 136 may be programmed to output a series of closely spaced detents onto the strum bar 500 as the user strums a chord, whereby each detent represents striking each of the multiple strings. In some implementations, the strum bar actuator 136 as well as one or more fret button actuators 134 (Figure 2) may be activated simultaneously to simulate the ringing of one or more strings when a note or chord is played. For example, a jolt or pulse may be output by the strum bar actuator 136 while a vibration may be output by the fret button actuator 134 when the user plays a sustained note in the video game. Again, as described above the actuator in the neck is activated to output a haptic effect that is felt on the user's left hand (in the case of playing guitar right handed) along with the haptic effects output by the actuator on the strum bar 500. In some implementations, one or more actuators in the body is activated to output a haptic effect that is felt by the user along with the haptic effects output by the actuator on the strum bar 500. In some implementations of the invention, whammy bar 120 may be implemented in a similar fashion to that described above with regard to strum bar 500.

This may provide the user with a tactile indication of one or more virtual strings. In addition, the user may optimize the speed and accuracy at which he or she is playing by utilizing the tactile information to adjust the physical hand motions. In addition, haptic effects provided by the actuator 136 combined with the center-based strum bar configuration may improve the user's experience as it would feel like the strum bar 500 has come alive or has a realistic feeling.

In some implementations, the strum bar may be replaced by a touch element such as a touch pad or touch screen in which the touch element senses the user's digit upon the digit contacting the touch element. The touch element may output a respective sensor signal like that produced by the strum bar discussed above. In some implementations, the touch element displays one or more virtual strings, whereby the user is able to select any or all of the displayed strings by running his or her finger along the touch screen over the displayed string(s). The touch element may include one or more actuators coupled thereto which provide the user with isolated haptic effects to simulate the feel of playing across the virtual displayed strings. In some implementations, the touch element may be programmable to display the desired number of virtual strings (e.g. 4, 5, 6 or 12).

In some implementations, the guitar may utilize a real string instead of a touch element or strum bar, in which the user plucks or strikes the string. A force sensor may be coupled to the string, whereby the force sensor is able to determine when the user strikes the string. In some implementations, the magnitude of the force at which the user strikes the string is monitored, whereby the monitored force is transmitted to the console to affect game play.

In some implementations, the guitar incorporates multiple strum bars (Figures 9A and 9B), in which each strum bar represents one or more different virtual strings to be played in the game. As illustrated in Figure 9A, the multiple lateral strum bars 600, 602, 604, 606 are separately spaced and next to one another to look and function like individual strings. As illustrated in Figure 9B, the guitar has one overall strum bar 700 having multiple strum bar segments 702, 704, 706, 708, whereby each strum bar segment is individually actuatable by the user's individual fingers to simulate finger picking. It is contemplated that one or more strum bar actuators discussed above may be utilized with the multiple strum bars. In some implementations, the guitar includes multiple lateral strum bars as in Figure 9A, whereby one or more of the lateral strum bars have multiple strum bar segments as in Figure 9B.

In some implementations, the haptic enabled guitar may output haptic effects to the whammy bar to provide a pleasurable experience to the user. As mentioned in Figure 2, the guitar includes the actuator 138 which outputs a haptic effect onto the whammy bar 120 in response to the whammy bar being operated by the user. In particular, a whammy bar sensing element 132 coupled to the whammy bar 120 may sense the distance that the whammy bar 120 is pressed or pulled by the user, whereby the actuator 138 may output a resistive or vibrational force in response to the sensed movement. In some implementations, the sensed movement of the whammy bar may be used to modulate a haptic effect output elsewhere on the device, such as the fret buttons or overall body of the guitar. This feature would be particularly compelling when playing long sustain notes, whereby operating the whammy bar would modulate the haptic effect felt on the neck and/or the body. In some implementations, upon the strum bar being struck to play a sustained note, the whammy bar may be modulated to produce a sinusoidal or other modulated haptic effect while the note remains sustained in intensity (as opposed to the note trailing or fading out while being sustained.)

In addition to the haptic enabled guitar, the software of the video game may provide additional advantages which provide a more pleasurable experience to the user. In some implementations, the video game may instruct the local processor 126 to cause the actuator to output a first order vibration to the body, fret buttons and/or strum bar of the guitar to achieve a warm, realistic feel of a guitar being played. This haptic effect could start out with low amplitude and increase in magnitude as the user continues to get the timing right for the game in an effort of simulating the 'flow' experience of playing a guitar. In some implementations, when the user's timing is off, a discordant haptic effect could be output by any or all of the actuators as an indication to the user. In some implementations, actuators located on the back of the body as well as the front strum hand area and the strum bar could be activated to produce such the above discussed sensations. In some implementations, the haptic effects output by the various actuators may vary depending on the type of guitar selected by the user in the video game (e.g. greater vibrations in the body for "hollow body" guitars as opposed to more subtle vibrations in the body of a "solid body" guitar.)

In some implementations, the guitar may be configured such that it provide haptic confirmation of button presses or strum events when the user successfully strikes the notes in the game. In other words, haptic effects would be output by the actuators to provide confirmation of button presses or strum bar effects when the user successfully depresses the correct button on the guitar with the button displayed on the screen.

In some implementations, the guitar may be configured to output one or more haptic effects to indicate that the user has successfully depressed in a predetermined number of correct notes. For example, in the game there is the concept of "note streaks" when the user successfully depresses a predetermined number of consecutive correct notes. The guitar may output one or more haptic effects from one or more actuators to reward the player after he or she has achieved a note streak milestone. A haptic effect could also be created that increases in magnitude as the user hits consecutive correct notes, whereby the increased magnitude is felt in the body and/or neck of the controller. As soon as the user misses a note the effect resets and the user knows he has ended his effect streak. In some implementations, the guitar may be configured to output another haptic effect when the user depresses one or more incorrect buttons.

As discussed above, the video game may have the ability for the user to utilize hammer-ons and pull offs on the guitar during gameplay. The haptic enabled guitar may use distinct haptic effect while the user to performing a hammer-on or pull-off action in which the actuator outputs the haptic effect on the buttons which the user is performing the actions.

One gaming concept is head-to-head play or "battle mode," whereby two players compete against one another to successfully hit the most number of notes in a given time. A feature in the battle mode is for one player to launch distraction items that distract the other player during the competition. For example, in the battle mode, one distraction item when launched causes the other player's screen to catch fire, thereby preventing the user from seeing the notes for a given amount of time and thus inhibiting their ability to successfully hit notes during that time. The distraction items can be used with haptic enabled guitars, whereby launched distraction items cause the recipient's guitar to uncontrollably vibrate or output haptic effect which cause an irregular beat or beats not in sync with the notes displayed on the screen, or temporarily disable haptic feedback altogether.

In some implementations, the guitar's on-board accelerometer may send distinct signals of the guitar's position to the host computer which would in turn update the avatar's guitar on the screen to match the user's guitar position. For example, the guitar's accelerometer could sense the user putting the guitar between his legs or behind his head, whereby the host computer would instruct the video game to show the displayed avatar putting the guitar between his legs or behind his head.

As mentioned above, various implementations of the haptic enabled gaming peripheral have been described in the context of the guitar 100. However, various ones of the implementations described above may pertain to simulating other types of instruments as would be appreciated. By way example, the description of fret buttons 114,118 and their associated sensors 128 and actuators 134 may pertain to keys of various wind instruments and/or valves of various brass instruments and/or keys of keyboard instruments. Other sensors may be used to measure air flow and timing thereof applied by the user to the various wind or brass instruments. Also by way of example, the description of strum bar 116 and its associated sensor 130 and actuator 134 may pertain to other "plucked" string instruments (e.g., mandolin, banjo, steel guitar, etc.). Further by way of example, this description may be readily extended to those string instruments that require use of a bow (e.g., violin, cello, etc.) in which case it may be desirable to employ a first gaming peripheral to simulate the string instrument and a second gaming peripheral to simulate the bow. Still further by way of example, this description may be extended to simulate various percussion instruments through the instruments themselves and/or via the mallets or sticks used to play them.

While various implementations and applications have been shown and described, it would be apparent to those skilled in the art having the benefit of this disclosure that many more modifications than mentioned above are possible without departing from the inventive concepts disclosed herein. For example, although the above descriptions of the gaming peripheral that simulates a musical instrument for use with a video and/or musical game, it is contemplated that various implementations of the invention may be used as a training tool to teach new players how to play the musical instrument. The invention, therefore, is not to be restricted except in the spirit of the appended claims.

## Claims

1. A haptic enabled gaming peripheral comprising:
a body that simulates a musical instrument, the body simulating a guitar (100) comprising a guitar body (102) and a neck (108);
a first input element, disposed within the body, that receives an input from a user, the first input element being disposed within the neck (108), the first input element being a touch screen configured to display a graphical object therethrough, the graphical object including one or more strings of the guitar (100);
a processor (126) disposed within the body, wherein the processor (126) communicates with a host computer (99) running a software program, wherein the processor (126) is coupled to the first input element and communicates the input received from the user to the host computer (99); and
a first actuator disposed within the body and coupled to the processor (126),
wherein the first actuator outputs a haptic effect to the first input element in response to receiving an activating signal based on an event occurring in the software program.

2. The gaming peripheral of claim 1, further comprising:
a sensing element coupled to the first input element, wherein the sensing element outputs a first sensor signal to the host computer (99) in response to detecting the first input element being selected by the user.

3. The gaming peripheral of claim 1, further comprising:
a second actuator positioned within the body, wherein the second actuator outputs a corresponding haptic effect to the body upon receiving a second activating signal in response to a corresponding event occurring in the software program.

4. The gaming peripheral of claim 2, wherein the sensing element is configured to vary the first sensor signal in response to detecting a finger of the user moving in a direction along the first input element after the sensing element has detected the user has selected the input element, wherein the varied first sensor signal correspondingly updates the software program, and wherein the first actuator varies the haptic effect in response to a corresponding activating signal based on the sensing element detecting the finger moving in the direction along the first input element.

5. The gaming peripheral of claim 2, further comprising a light emitting device coupled to the first input element, wherein the light emitting device is configured to emit a light upon receiving a light emitting signal from the host computer (99).

6. The gaming peripheral of claim 1, wherein:
the first input element comprises a strum bar and wherein the first actuator outputs the haptic effect to the strum bar, whereby the user perceives the haptic effect as responsive to the user moving the strum bar;
the first input element comprises a fret key and wherein the first actuator outputs the haptic effect proximate to the fret key, whereby the user perceives the haptic effect as responsive to the user selecting the fret key;
the first input element comprises a fret key and wherein the first actuator outputs the haptic effect to the fret key, whereby the user perceives the haptic effect as responsive to the user selecting the fret key;
wherein the first input element comprises a whammy bar and wherein the first actuator outputs the haptic effect to the body proximate to the whammy bar, whereby the user perceives the haptic effect as responsive to the user selecting the whammy bar; or
wherein the first input element comprises a whammy bar and wherein the first actuator outputs the haptic effect to the whammy bar, whereby the user perceives the haptic effect as responsive to the user selecting the whammy bar.

7. A method of operating a gaming peripheral having a body that simulates a musical instrument, the body simulating a guitar (100) comprising a guitar body (102) and a neck (108), the method comprising:
sensing a selection of a first input element disposed within the body of the gaming peripheral via a first sensing element and sending a first sensor signal to a host computer (99) running a software program, the software program corresponding to a musical game, the first sensor signal representative of an input from the user to the musical game, the first input element being disposed within the neck (108), the first input element being a touch screen configured to display a graphical object therethrough, the graphical object including one or more strings of the guitar (100); and
outputting a haptic effect to the first input element via a first actuator in response to receiving a first activating signal from the host computer (99), the first activating signal corresponding to an event in the musical game.

8. The method of claim 7, wherein the first actuator and the first input element are disposed within the body proximate to one another, wherein the event in the musical game is responsive to the input from the user, whereby the haptic effect output by the first actuator is perceived by the user as being responsive to the input received from the user.

9. The method of claim 7, further comprising:
sensing a selection of a second input element disposed within the body of the gaming peripheral via a second sensing element and sending a second sensor signal to the host computer (99), the second sensor signal representative of a second input from the user to the musical game.

10. The method of claims 8 or 9, further comprising:
outputting a second haptic effect to the body of the gaming peripheral via a second actuator in response to receiving a second activating signal from the host computer (99), the second activating signal corresponding to a second event in the musical game.

11. The gaming peripheral of claim 1, wherein the haptic effect changes over time in response to the input from the user.

12. The gaming peripheral of claim 11, wherein the haptic effect increases in magnitude over time in response to the input from the user.

## Patentansprüche

1. Haptikfähiges Gaming-Peripheriegerät, umfassend:
einen Körper, der ein Musikinstrument simuliert, wobei der Körper eine Gitarre (100) simuliert, die einen Gitarrenkörper (102) und einen Hals (108) umfasst;
ein erstes Eingabeelement, angeordnet innerhalb des Körpers, das eine Eingabe von einem Benutzer empfängt, wobei das erste Eingabeelement innerhalb des Halses (108) angeordnet ist, wobei das erste Eingabeelement ein Touchscreen ist, der konfiguriert ist, ein grafisches Objekt dadurch anzuzeigen, wobei das grafische Objekt eine oder mehrere Saiten der Gitarre (100) enthält;
einen Prozessor (126), der innerhalb des Körpers angeordnet ist, wobei der Prozessor (126) mit einem Hostcomputer (99) kommuniziert, der ein Softwareprogramm ausführt, wobei der Prozessor (126) mit dem ersten Eingabeelement gekoppelt ist und die vom Benutzer empfangene Eingabe an den HostComputer (99) kommuniziert; und
einen ersten Aktor, der innerhalb des Körpers angeordnet und mit dem Prozessor (126) gekoppelt ist,
wobei der erste Aktor als Antwort auf das Empfangen eines Aktivierungssignals basierend auf einem in dem Softwareprogramm auftretenden Ereignisses einen haptischen Effekt an das erste Eingabeelement ausgibt.

2. Gaming-Peripheriegerät nach Anspruch 1, ferner umfassend:
ein Erfassungselement, das mit dem ersten Eingabeelement gekoppelt ist, wobei das Erfassungselement ein erstes Sensorsignal an den Hostcomputer (99) als Antwort auf das Erfassen dessen ausgibt, dass das erste Eingabeelement vom Benutzer ausgewählt ist.

3. Gaming-Peripheriegerät nach Anspruch 1, ferner umfassend:
einen zweiten Aktor, der innerhalb des Körpers positioniert ist, wobei der zweite Aktor bei Empfang eines zweiten Aktivierungssignals als Antwort auf ein entsprechendes Ereignis, das in dem Softwareprogramm auftritt, einen entsprechenden haptischen Effekt an den Körper ausgibt.

4. Gaming-Peripheriegerät nach Anspruch 2, wobei das Erfassungselement konfiguriert ist, das erste Sensorsignal als Antwort auf das Erkennen eines Fingers des Benutzers zu variieren, der sich in einer Richtung entlang dem ersten Eingabeelement bewegt, nachdem das Erfassungselement erfasst hat, dass der Benutzer das Eingabeelement ausgewählt hat, wobei das veränderte erste Sensorsignal das Softwareprogramm entsprechend aktualisiert, und wobei der erste Aktor den haptischen Effekt als Antwort auf ein entsprechendes Aktivierungssignal basierend darauf ändert, dass das Erfassungselement erfasst, das sich der Finger in der Richtung entlang dem ersten Eingabeelement bewegt.

5. Gaming-Peripheriegerät nach Anspruch 2, ferner umfassend eine Lichtemissionsvorrichtung, die mit dem ersten Eingabeelement gekoppelt ist, wobei die Lichtemissionsvorrichtung konfiguriert ist, bei Empfang eines Lichtemissionssignals von dem Hostcomputer (99) Licht zu emittieren.

6. Gaming-Peripheriegerät nach Anspruch 1, wobei:
das erste Eingabeelement eine Strum-Bar umfasst und wobei der erste Aktor den haptischen Effekt an die Strum-Bar ausgibt, wodurch der Benutzer den haptischen Effekt als Antwort darauf wahrnimmt, dass der Benutzer die Strum-Bar bewegt;
das erste Eingabeelement einen Bundschlüssel umfasst, und wobei der erste Aktor den haptischen Effekt in der Nähe des Bundschlüssels ausgibt, wodurch der Benutzer den haptischen Effekt als Antwort darauf wahrnimmt, dass der Benutzer den Bundschlüssel auswählt;
das erste Eingabeelement einen Bundschlüssel umfasst und wobei der erste Aktor den haptischen Effekt an den Bundschlüssel ausgibt, wodurch der Benutzer den haptischen Effekt als Antwort darauf wahrnimmt, dass der Benutzer den Bundschlüssel auswählt;
wobei das erste Eingabeelement eine Whammy-Bar umfasst und wobei der erste Aktor den haptischen Effekt an den Körper in der Nähe der Whammy-Bar ausgibt, wodurch der Benutzer den haptischen Effekt als Antwort darauf wahrnimmt, dass der Benutzer die Whammy-Bar auswählt; oder
wobei das erste Eingabeelement eine Whammy-Bar umfasst und wobei der erste Aktor den haptischen Effekt an die Whammy-Bar ausgibt, wodurch der Benutzer den haptischen Effekt als Antwort darauf wahrnimmt, dass der Benutzer die Whammy-Bar auswählt.

7. Verfahren zum Bedienen eines Gaming-Peripheriegeräts mit einem Körper, der ein Musikinstrument simuliert, wobei der Körper eine Gitarre (100) simuliert, die einen Gitarrenkörper (102) und einen Hals (108) umfasst, wobei das Verfahren umfasst:
Erfassen einer Auswahl eines ersten Eingabeelements, das innerhalb des Körpers des Gaming-Peripheriegeräts angeordnet ist, über ein erstes Erfassungselement, und Senden eines ersten Sensorsignals an einen Hostcomputer (99), der ein Softwareprogramm ausführt, wobei das Softwareprogramm einem Musikspiel entspricht, wobei das erste Sensorsignal repräsentativ für eine Eingabe von dem Benutzer an das Musikspiel ist, wobei das erste Eingabeelement innerhalb des Halses (108) angeordnet ist, wobei das erste Eingabeelement ein Touchscreen ist, der konfiguriert ist, der konfiguriert ist, ein grafisches Objekt dadurch anzuzeigen, wobei das grafische Objekt eine oder mehrere Saiten der Gitarre (100) enthält; und
Ausgeben eines haptischen Effekts an das erste Eingabeelement über einen ersten Aktor als Antwort auf den Empfang eines ersten Aktivierungssignals von dem Hostcomputer (99), wobei das erste Aktivierungssignal einem Ereignis in dem Musikspiel entspricht.

8. Verfahren nach Anspruch 7, wobei der erste Aktor und das erste Eingabeelement nahe beieinander innerhalb des Körpers angeordnet sind, wobei das Ereignis in dem Musikspiel auf die Eingabe des Benutzers anspricht, wodurch der von dem ersten Aktor ausgegebene haptische Effekt von dem Benutzer als Antwort auf die vom Benutzer empfangene Eingabe wahrgenommen wird.

9. Verfahren nach Anspruch 7, ferner umfassend:
Erfassen einer Auswahl eines zweiten Eingabeelements, das innerhalb des Körpers des Gaming-Peripheriegeräts angeordnet ist, über ein zweites Erfassungselement, und Senden eines zweiten Sensorsignals an den Hostcomputer (99), wobei das zweite Sensorsignal repräsentativ für eine zweite Eingabe von dem Benutzer an das Musikspiel ist.

10. Verfahren nach Anspruch 8 oder 9, ferner umfassend:
Ausgeben eines zweiten haptischen Effekts an den Körper des Gaming-Peripheriegeräts über einen zweiten Aktor als Antwort auf das Empfangen eines zweiten Aktivierungssignals von dem Hostcomputer (99), wobei das zweite Aktivierungssignal einem zweiten Ereignis in dem Musikspiel entspricht.

11. Gaming-Peripheriegerät nach Anspruch 1, wobei sich der haptische Effekt mit der Zeit als Antwort auf die Eingabe des Benutzers ändert.

12. Gaming-Peripheriegerät nach Anspruch 11, wobei der haptische Effekt mit der Zeit als Antwort auf die Eingabe des Benutzers an Größe zunimmt.

## Revendications

1. Périphérique de jeu à activation haptique comprenant :
un corps qui simule un instrument de musique, le corps simulant une guitare (100) comprenant un corps de guitare (102) et un manche (108) ;
un premier élément de saisie disposé au sein du corps qui reçoit une saisie d'un utilisateur, le premier élément de saisie étant disposé au sein du manche (108), le premier élément de saisie étant un écran tactile configuré pour afficher un objet graphique à travers lui, l'objet graphique incluant une ou plusieurs cordes de la guitare (100) ;
un processeur (126) disposé au sein du corps, dans lequel le processeur (126) communique avec un ordinateur hôte (99) exécutant un programme logiciel, dans lequel le processeur (126) est couplé au premier élément de saisie et communique la saisie reçue de l'utilisateur à l'ordinateur hôte (99) ; et
un premier actionneur disposé au sein du corps et couplé au processeur (126),
dans lequel le premier actionneur émet un effet haptique vers le premier élément de saisie en réponse à la réception d'un signal d'activation en fonction d'un événement se produisant dans le programme logiciel.

2. Périphérique de jeu selon la revendication 1, comprenant en outre :
un élément de détection couplé au premier élément de saisie, dans lequel l'élément de détection émet un premier signal de capteur vers l'ordinateur hôte (99) en réponse à la détection du premier élément de saisie qui est sélectionné par l'utilisateur.

3. Périphérique de jeu selon la revendication 1, comprenant en outre :
un second actionneur positionné au sein du corps, dans lequel le second actionneur émet un effet haptique correspondant vers le corps dès réception d'un second signal d'activation en réponse à un événement correspondant se produisant dans le programme logiciel.

4. Périphérique de jeu selon la revendication 2, dans lequel l'élément de détection est configuré pour faire varier le premier signal de capteur en réponse à la détection d'un doigt de l'utilisateur se déplaçant dans une direction le long du premier élément de saisie après que l'élément de détection a détecté que l'utilisateur a sélectionné l'élément de saisie, dans lequel le premier signal de capteur varié met à jour le programme logiciel de manière correspondante, et dans lequel le premier actionneur fait varier l'effet haptique en réponse à un signal d'activation correspondant en fonction de l'élément de détection détectant le doigt se déplaçant dans la direction le long du premier élément de saisie.

5. Périphérique de jeu selon la revendication 2, comprenant en outre un dispositif d'émission lumineuse couplé au premier élément de saisie, dans lequel le dispositif d'émission lumineuse est configuré pour émettre une lumière dès réception d'un signal d'émission lumineuse de l'ordinateur hôte (99).

6. Périphérique de jeu selon la revendication 1, dans lequel :
le premier élément de saisie comprend une barre de battement et dans lequel le premier actionneur émet l'effet haptique vers la barre de battement, moyennant quoi l'utilisateur perçoit l'effet haptique comme réactif à l'utilisateur déplaçant la barre de battement ;
le premier élément de saisie comprend une clé de frette et dans lequel le premier actionneur émet l'effet haptique à proximité de la clé de frette, moyennant quoi l'utilisateur perçoit l'effet haptique comme réactif à l'utilisateur sélectionnant la clé de frette ;
le premier élément de saisie comprend une clé de frette et dans lequel le premier actionneur émet l'effet haptique vers la clé de frette, moyennant quoi l'utilisateur perçoit l'effet haptique comme réactif à l'utilisateur sélectionnant la clé de frette ;
dans lequel le premier élément de saisie comprend une barre de vibrato et dans lequel le premier actionneur émet l'effet haptique vers le corps à proximité de la barre de vibrato, moyennant quoi l'utilisateur perçoit l'effet haptique comme réactif à l'utilisateur sélectionnant la barre de vibrato ; ou
dans lequel le premier élément de saisie comprend une barre de vibrato et dans lequel le premier actionneur émet l'effet haptique vers la barre de vibrato, moyennant quoi l'utilisateur perçoit l'effet haptique comme réactif à l'utilisateur sélectionnant la barre de vibrato.

7. Procédé d'opération d'un périphérique de jeu ayant un corps qui simule un instrument de musique, le corps simulant une guitare (100) comprenant un corps de guitare (102) et un manche (108), le procédé comprenant :
détecter une sélection d'un premier élément de saisie disposé au sein du corps du périphérique de jeu par le biais d'un premier élément de détection et envoyer un premier signal de capteur à un ordinateur hôte (99) exécutant un programme logiciel, le programme logiciel correspondant à un jeu musical, le premier signal de capteur étant représentatif d'une saisie provenant de l'utilisateur vers le jeu musical, le premier élément de saisie étant disposé au sein du manche (108), le premier élément de saisie étant un écran tactile configuré pour afficher un objet graphique à travers lui, l'objet graphique incluant une ou plusieurs cordes de la guitare (100) ; et
émettre un effet haptique vers le premier élément de saisie par le biais d'un premier actionneur en réponse à la réception d'un premier signal d'activation de l'ordinateur hôte (99), le premier signal d'activation correspondant à un événement dans le jeu musical.

8. Procédé selon la revendication 7, dans lequel le premier actionneur et le premier élément de saisie sont disposés au sein du corps à proximité l'un de l'autre, dans lequel l'événement dans le jeu musical est réactif à la saisie provenant de l'utilisateur, moyennant quoi l'effet haptique émis par le premier actionneur est perçu par l'utilisateur comme étant réactif à la saisie reçue de l'utilisateur.

9. Procédé selon la revendication 7, comprenant en outre :
détecter une sélection d'un second élément de saisie disposé au sein du corps du périphérique de jeu par le biais d'un second élément de détection et envoyer un second signal de capteur à l'ordinateur hôte (99), le second signal de capteur étant représentatif d'une seconde saisie provenant de l'utilisateur vers le jeu musical.

10. Procédé selon la revendication 8 ou 9, comprenant en outre :
émettre un second effet haptique vers le corps du périphérique de jeu par le biais d'un second actionneur en réponse à la réception d'un second signal d'activation de l'ordinateur hôte (99), le second signal d'activation correspondant à un second événement dans le jeu musical.

11. Périphérique de jeu selon la revendication 1, dans lequel l'effet haptique change dans le temps en réponse à la saisie provenant de l'utilisateur.

12. Périphérique de jeu selon la revendication 11, dans lequel l'effet haptique augmente d'amplitude dans le temps en réponse à la saisie provenant de l'utilisateur.
